(19) Europäisches Patentamt
European Patent Office
Office européen des brevets

(11) **EP 1 515 020 B1**

(12) **EUROPÄISCHE PATENTSCHRIFT**

(45) Veröffentlichungstag und Bekanntmachung des Hinweises auf die Patenterteilung:
**26.09.2007 Patentblatt 2007/39**

(51) Int Cl.:
**F02B 37/00** (2006.01)

(21) Anmeldenummer: 04104369.6

(22) Anmeldetag: **10.09.2004**

(54) **Brennkraftmaschine mit Abgasturbolader**

Internal combustion engine with turbo charger

Moteur à combustion interne avec turbocompresseur

(84) Benannte Vertragsstaaten:
**AT BE BG CH CY CZ DE DK EE ES FI FR GB GR HU IE IT LI LU MC NL PL PT RO SE SI SK TR**

(30) Priorität: **11.09.2003 DE 10342018**

(43) Veröffentlichungstag der Anmeldung:
**16.03.2005 Patentblatt 2005/11**

(73) Patentinhaber: **Volkswagen AG**
**38436 Wolfsburg (DE)**

(72) Erfinder:
• **POTT, Ekkehard**
**38518, Gifhorn (DE)**
• **HAGELSTEIN, Dirk**
**38110 Braunschweig (DE)**
• **KLOFT, Manfred**
**38154, Rohde (DE)**
• **EBUS, Feitse**
**38446, Wolfsburg (DE)**
• **STIEBELS, Bernd**
**38528, Adenbüttel (DE)**
• **THEOBALD, Jörg**
**38165, Lehre (DE)**

(74) Vertreter: **Kandlbinder, Markus Christian et al**
**Zeitler - Volpert - Kandlbinder**
**Patentanwälte**
**Herrnstrasse 44**
**80539 München (DE)**

(56) Entgegenhaltungen:
**EP-A- 1 323 907         DE-A- 10 007 669**
**DE-A- 10 043 760        US-A- 5 025 629**

**Beschreibung**

Die Erfindung betrifft eine Brennkraftmaschine, insbesondere einen direkteinspritzenden Dieselmotor oder Ottomotor, insbesondere eines Kraftfahrzeuges, mit einem Abgasturbolader, welcher einen Verdichter und eine Turbine aufweist, wobei die Brennkraftmaschine eine vorbestimmte Nenndrehzahl $n_{Nenn}$ sowie ein vorbestimmtes Hubvolumen $V_H$ aufweist, wobei ferner ein Verdichterdruckverhältnis $p_{Verdichterdruckerhältnis}$ des Verdichters des Abgasturboladers definiert ist als der Quotient eines Druckes $p_{2t}$ nach dem Verdichter zu einem Druck $p_{1t}$ vor dem Verdichter gemäß der Formel

$$p_{Verdichterdruckverhältnis} = \frac{p_{2t}}{p_{1t}}$$ und wobei ferner ein normierter Frischluftvolumenstrom $V_{NORM}$ definiert ist als ein Quotient eines Frischluftvolumenstrom $V_{pkt1}$ vor dem Verdichter des Abgasturboladers zu einem Produkt aus der Nenndrehzahl $n_{Nenn}$ der Brennkraftmaschine und dem Hubvolumen $V_H$ der Brennkraftmaschine gemäß der Formel $V_{NORM} = \frac{V_{pkt1}}{n_{Nenn} * V_H}$ , gemäß dem Oberbegriff des Anspruchs 1. Die Erfindung betrifft ferner ein Verfahren zum Betreiben dieser Brennkraftmaschine, gemäß dem Oberbegriff des Anspruchs 6.
Turbomotoren werden primär zur Steigerung der hubraumspezifischen Spitzenleistung eingesetzt. Damit einher geht die Verwendung vergleichsweise großvolumiger Turbolader mit Turbine bzw. Verdichter, die bei hohen Drehzahlen und Abgasmassenströmen einen hohen Aufladegrad erreichen, aber bei kleinen Drehzahlen und Abgasmassenströmen ein träges Ansprechverhalten bei Lastanforderung aufweisen (sogen. Turboloch). Von vielen Fahrern wird die stationäre Drehmomentcharakteristik eines aufgeladenen direkteinspritzenden Dieselmotors als angenehm empfunden, das Turboloch ist jedoch auch dort vorhanden.
Aus der DE 695 19 306 T2 ist es zur Reduzierung des Turboloches bekannt, eine Hilfsverbrennungskammer vorzusehen, welche Gase zum Antrieb der Turbine des Turboladers erzeugt.
Aus der DE 198 26 355 A1 ist eine Vorrichtung zur Steuerung einer Abgasturboladerturbine für Brennkraftmaschinen mit wenigstens zwei Abgasfluten bekannt. Eine Ventileinrichtung ist in einem Abgassystem vorgesehen und weist zwei Ventilelemente auf. Durch das erste Ventilelement ist eine Öffnung zwischen der einen Abgasflut und der anderen Abgasflut verschließbar. Durch das zweite Ventil ist eine Öffnung zwischen der einen Abgasflut und einer Verbindungsleitung verschließbar. Durch die Anordnung des zweiten Ventilelementes der Ventileinrichtung zwischen der einen Abgasflut und der Verbindungsleitung ist es möglich, die Verbindungsleitung bei einem bestimmten Druck zu öffnen, wodurch zusätzlich zu der Stauaufladung der Turbine, welche durch das Öffnen des ersten Ventilelementes erzielt wird, ein Teilstrom des Abgases an der Turbine vorbeigeleitet wird. Dadurch wird einem Anstieg der Ladungswechselarbeit bzw. Gaswechselarbeit entgegengewirkt, weil der Durchsatz von Abgas in der zu der Turbine führenden Abgasleitung begrenzt wird. Die Schluckfähigkeit der Turbine wird stark erhöht und es kann eine Turbine mit sehr kleinem Querschnitt verwendet werden, was bei niedrigen Motordrehzahlen durch die erzielbaren höheren Ladedrücke eine bessere Turbinenleistung zur Folge hat. Die Turbine kann dadurch so ausgelegt werden, dass sie im unteren Drehzahlbereich noch ein möglichst akzeptables Ansprechverhalten aufweist und somit ein höchstmögliches Ladedruckniveau und eine damit verbundene hohe Leistung der Turbine erbracht wird.
Aus der DE 197 06 859 A1 ist ein Verfahren und eine Vorrichtung zur Steigerung des Wirkungsgrades von aufgeladenen Ottomotoren über eine Erhöhung der Grundverdichtung bekannt. Mittels einer zwei- oder mehrstufigen Ladeluftverdichtung und mehrstufiger Ladeluftkühlung kann der Ladedruck über das Niveau bisheriger aufgeladener Brennkraftmaschinen mit einstufiger Ladeluftkühlung angehoben werden.
Der Erfindung liegt die Aufgabe zugrunde, eine abgasturboaufgeladene Brennkraftmaschine mit gutem Ansprechverhalten auch bei kleinen Drehzahlen zur Verfügung zu stellen.
Diese Aufgabe wird erfindungsgemäß durch eine Brennkraftmaschine der o.g. Art mit den in Anspruch 1 gekennzeichneten Merkmalen sowie durch ein Verfahren der o.g. Art mit den in Anspruch 6 gekennzeichneten Merkmalen gelöst. Vorteilhafte Ausgestaltungen der Erfindung sind in den abhängigen Ansprüchen angegeben.
Dazu ist es bei einer Brennkraftmaschine der o.g. Art erfindungsgemäß vorgesehen, dass der Abgasturbolader derart ausgebildet ist, dass eine ein Verdichterkennfeld, in dem das Verdichterdruckverhältnis $p_{Verdichterdruckerhältnis}$ über dem normierten Frischluftvolumenstrom $V_{NORM}$ aufgetragen ist, begrenzende Funktion des Verdichterdruckverhältnisses $p_{Verdichterdruckernältnis}$ in Abhängigkeit von dem normierten Frischluftvolumenstrom $V_{NORM}$ für eine konstante Verdichterdrehzahl $n_V = n_{Vmax}$, wobei $n_V$ eine Drehzahl des Verdichters des Abgasturboladers und $n_{Vmax}$ eine vorbestimmte maximale Drehzahl des Verdichters des Abgasturboladers ist, einen Wert $p_{Verdichterdruckerhältnis}$ ($V_{NORM}$) =1 bei einem Wert $V_{NORM} < 0,7$, insbesondere $V_{NORM} < 0,65$, vorzugsweise $V_{NORM} < 0,60$, erreicht.
Ferner ist es bei einem Verfahren der o.g. Art erfindungsgemäß vorgesehen, dass in einem mittleren bis oberen Drehzahlbereich entsprechend $V_{Norm} > 0,35$ der Ladedruck des Turboladers, beispielsweise durch Öffnen eines Wastegates des Abgasturboladers, abgesenkt wird.

Dies hat den Vorteil, dass eine Auslegung des Abgasturboladers relativ zu den wesentlichen Kenndaten der Brennkraftmaschine, nämlich Hubraum und Nennrehzahl, derart getroffen ist, dass in einem oberen Drehzahlbereich ein relativ geringes Verdichterdruckverhältnis vorliegt, während ein Ladedruck bei niedrigen Drehzahlen angehoben ist. Gleichzeitig wird eine Verbrauchsminderung bei besserer Fahrleistung erzielt.

Dadurch, dass der Abgasturbolader derart ausgebildet ist, dass eine Funktionenschar $p_{Verdichterdruckerhältnis}$ ($V_{NORM}$) für

$$0{,}5 \leq \frac{n_V}{n_{V\,max}} \leq 1$$ den Wert 1 im Bereich 0,3 <

$V_{NORM}$< 0.65 erreicht, ergibt sich eine reduzierte Breite des Verdichterkennfeldes, wodurch geometrische Maße des Verdichters und der Turbine entsprechend dem reduzierten Abgas- und Frischluftmassenstrom kleiner gewählt werden können.

Beispielsweise beträgt das Hubvolumen der Brennkraftmaschine 700 cm³ bis 5.100 cm³, insbesondere 950 cm³ bis 2250 cm³, vorzugsweise 990 cm³ bis 1.800 cm³ und die Nenndrehzahl der Brennkraftmaschine 4.800 U/min bis 6.200 U/min, insbesondere 5.200 U/min bis 5.700 U/min.

Weitere Merkmale, Vorteile und vorteilhafte Ausgestaltungen der Erfindung ergeben sich aus den abhängigen Ansprüchen, sowie aus der nachstehenden Beschreibung der Erfindung anhand der beigefügten Zeichnungen. Diese zeigen in

Fig. 1 ein Verdichterkennfeld für einen Verdichter eines Abgasturboladers einer erfindungsgemäßen Brennkraftmaschine,

Fig. 2 ein Verdichterkennfeld für einen Verdichter eines Abgasturboladers einer herkömmlichen Brennkraftmaschine und

Fig. 3 Turbinenkennfelder für eine Turbine eines Abgasturboladers einer erfindungsgemäßen und einer herkömmlichen Brennkraftmaschine.

Erfindungsgemäß ist die Kombination von Abgasturbolader und Brennkraftmaschine derart gewählt, dass diese insbesondere im oberen Motordrehzahlbereich im Vergleich zu herkömmlich aufgeladenen Motoren ein relativ geringes Verdichterdruckverhältnis aufweist. Das Ansprechverhalten des Abgasturboladers ist bei niedrigen Drehzahlen verbessert, da der Ladedruck im Bereich niedriger Motordrehzahlen der Brennkraftmaschine angehoben ist. Im Bereich von mittleren bis hohen Motordrehzahlen wird der Ladedruck durch geeignete Auswahl der Komponenten und ggf. durch eine entsprechend ausgeführte Regelung, beispielsweise mittels eines Wastegates, der Ladedruck zusätzlich signifikant abgesenkt. Dadurch kann der maximal vom Verdichter zu bewältigende Luftstrom bzw. der maximal von der Turbine zu bewältigende Abgasmassenstrom deutlich reduziert werden, wogegen bei einer herkömmlichen Auslegung der Ladedruck über einen weiten Drehzahlbereich bis zur Nenndrehzahl nahezu konstant gehalten wird oder sogar ansteigt. Bei der konventionellen Auslegung führt dies zu einer deutlichen Anhebung der Motorleistung und damit des Verbrennungsluft- und des Abgasmassenstromes. Während daher herkömmlicherweise die Turbomaschinen, d.h. Verdichter und Turbinen, zur Bewältigung hoher Massenströme als große Einheiten ausgebildet sein müssen, genügen bei der erfindungsgemäßen Auslegung kleine geometrische Abmessungen von Turbine und Verdichter.

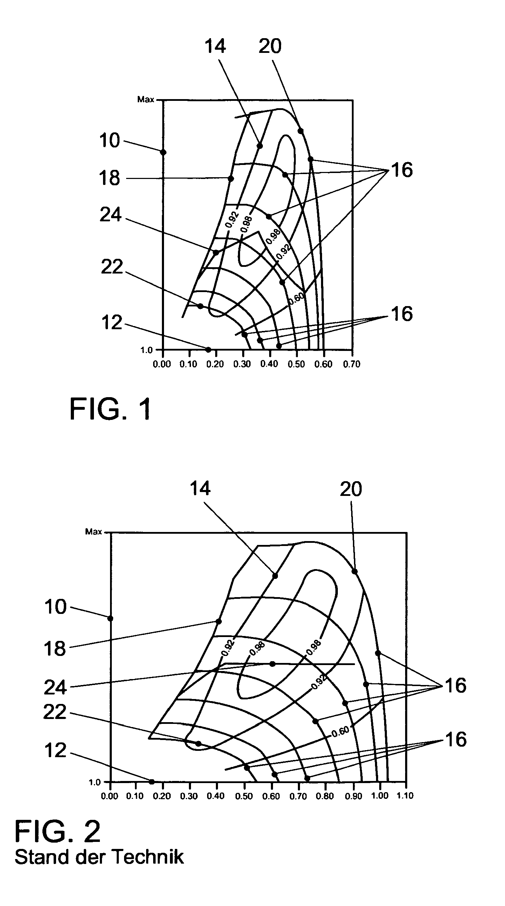

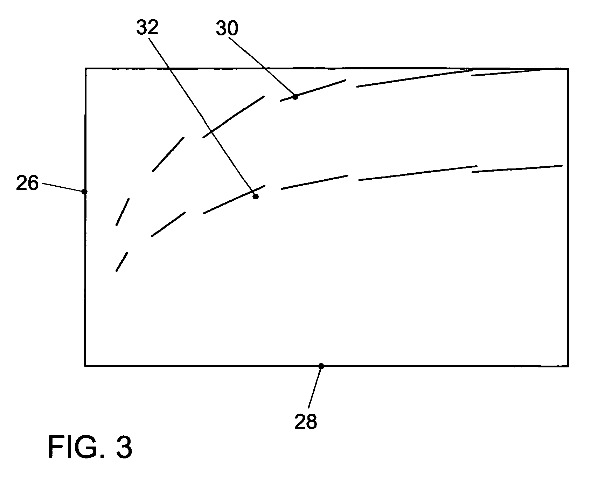

Fig. 1 zeigt ein Verdichterkennfeld für einen Verdichter eines Abgasturboladers für eine erfindungsgemäße Kombination von Abgasturbolader und Brennkraftmaschine. Fig. 2 zeigt ein Verdichterkennfeld für einen Verdichter eines Abgasturboladers für eine herkömmliche Kombination von Abgasturbolader und Brennkraftmaschine. Hierbei ist auf der vertikalen Achse 10 ein Verdichterdruckverhältnis $p_{Verdicherdruckverhältnis}$ aufgetragen, welches gemäß der Formel

$$p_{Verdichterdruckverhältnis} = \frac{p_{2t}}{p_{1t}}$$

definiert ist, wobei $p_{1t}$ ein Druck vor dem Verdichter und $p_{2t}$ ein Druck nach dem Verdichter ist. Auf der horizontalen Achse 12 ist ein normierter Frischluftvolumenstrom $V_{NORM}$ aufgetragen, welcher als ein Quotient eines Frischluftvolumenstrom $V_{pkt1}$ vor dem Verdichter zu einem Produkt aus der Nenndrehzahl $n_{Nenn}$ der Brennkraftmaschine und dem Hubvolumen $V_H$ der Brennkraftmaschine gemäß der Formel

$$V_{NORM} = \frac{V_{pkt1}}{n_{Nenn} * V_H},$$

definiert ist. Der Wert $V_{Norm}$ berücksichtigt eine Auslegung des Abgasturboladers in Bezug auf die charakteristischen Größen $n_{Nenn}$ und $V_H$ der Brennkraftmaschine. Mit 14 sind Linien mit konstantem auf den Maximalwert bezogenen Wirkungsgrad des Verdichters bezeichnet, mit 16 sind Linien mit konstantem Wert für $n_V/n_{Vmax}$ bezeichnet, wobei $n_V$ eine Drehzahl des Verdichters des Abgasturboladers und $n_{Vmax}$ eine vorbestimmte maximale Drehzahl des Verdichters des Abgasturboladers ist, und mit 18 ist eine Pumpgrenze bezeichnet, unterhalb derer der Verdichter des Abgasturboladers nicht ohne Schaden zu nehmen betrieben werden kann. Eine Linie 20 kennzeichnet einen Verlauf der Funktion $p_{Verdichterdruckverhältnis}(V_{Norm})$ für einen Wert $n_V/n_{Vmax} = 1$ und eine Linie 22 kennzeichnet einen Verlauf der Funktion $p_{Verdichterdruckverhältnis}(V_{Norm})$ für einen Wert $n_V/n_{Vmax} = 0{,}5$. Alle dazwischen dargestellten Linien 16 kennzeichnen einen Verlauf der Funktion $p_{Verdichterdruckverhält nis}(V_{Norm})$ für Werte $0{,}5 < n_V/n_{Vmax} < 1$. Eine Linie 24 kennzeichnet eine Vollastbetriebslinie der Brennkraftmaschine.

Im Vergleich der Verdichterkennfelder gemäß Fig. 1 und Fig. 2 ist ersichtlich, dass sich bei dem Verdichterkennfeld gemäß Fig. 1 durch Absenkung des Ladedruckes im oberen Drehzahlbereich der durchzusetzende Volumenstrom bei gleichem Hubraum und gleicher Nenndrehzahl deutlich verringert, so dass ein kleinerer Verdichter eingesetzt werden kann. Die Pumpgrenze 18 des kleineren Verdichters liegt bei kleineren Volumenströmen, wodurch ein größerer Ladedruck und damit ein größeres Motormoment bei kleiner Motordrehzahl erreichbar sind. Das Verdichterkennfeld gemäß Fig. 1 ist schmäler. Der Verlauf gemäß der Funktion $p_{Ver dichterdruckverhältnis}(V_{Norm})$ für einen Wert $n_V/n_{Vmax} = 1$ gemäß Linie 20 begrenzt das Verdichterkennfeld in Richtung höhere Werte für $V_{Norm}$. Wie sich unmittelbar im Vergleich der Verdichterkennfelder gemäß Fig. 1 und Fig. 2 ergibt, befindet sich diese Grenzlinie 20 bei Fig. 1 bei deutlich niedrigeren Werten für $V_{Norm}$.

Fig. 3 zeigt ein Turbinenkennfeld für eine Turbine eines Abgasturboladers. Auf der vertikalen Achse 26 ist ein reduzierter Turbinenmassenstrom mredT und auf der horizontalen Achse 28 ist ein Entspannungsverhältnis der Turbine $p_{3t}/p_{4t}$ aufgetragen, wobei $p_{3t}$ ein Druck stromauf der Turbine des Abgasturboladers und $p_{4t}$ ein Druck stromab der Turbine des Abgasturboladers ist. Bei 30 ist ein Verlauf von mredT über das Entspannungsverhältnis für eine herkömmliche Auslegung des Abgasturboladers gemäß Verdichterkennfeld von Fig. 2 und bei 32 ist ein Verlauf von mredT über das Entspannungsverhältnis für eine erfindungsgemäße Auslegung des Abgasturboladers gemäß Verdichterkennfeld von Fig. 1 aufgetragen. Hieraus ist ersichtlich, dass bei gleichem Entspannungsverhältnis auch der Abgasmassenstrom 26 bei einer erfindungsgemäßen Turbinenauslegung gemäß Linie 32 geringer ist als bei einer herkömmlichen Auslegung gemäß Linie 30. Umgekehrt erreicht die kleinere Turbine der erfindungsgemäßen Auslegung gemäß Linie 32 bei gleicher Motordrehzahl einen höheren Abgasgegendruck, so dass die Leistung der Turbine im unteren Bereich der Motordrehzahl steigt, wie aus Fig. 1, Linie 24 ersichtlich ist. Ein Wastegate der Turbine kann eine überschüssige Abgasmenge trotz der geringen Abmessungen auch im oberen Drehzahlbereich an der Turbine vorbeiführen, da im Vergleich zum konventionellen Turbomotor weniger Abgasstrom anfällt.

Optional wird, wie unmittelbar von der Vollastkennlinie 24 in Fig. 1 ersichtlich, durch eine entsprechende Regelung, beispielsweise eine Wastegate-Regelung, der Ladedruck von mittleren bis zu hohen Motordrehzahlen, entsprechend Werten von $V_{Norm}$ von 0,35 bis 0,55, signifikant abgesenkt.

Durch die erfindungsgemäße Auslegung des Abgasturboladers in Bezug auf die Brennkraftmaschine wird folgendes erreicht: Eine höhere Turbinenleistung bei kleinen Motordrehzahlen; ein geringeres Massenträgheitsmoment des Rotors des Abgasturboladers; geringere Lagerreibungsverluste aufgrund eines kleineren Wellendurchmessers; geringere thermische Trägheit des Turbinengehäuses; weniger Wärmeverluste in der Turbine wegen kleinerer Oberfläche; geringere Baugröße; eine Anhebung des stationären Drehmomentes bei niedrigen Motordrehzahlen gegenüber herkömmlichen Turbomotoren; ein wesentlich besseres Ansprechverhalten des Abgasturboladers mit gutem dynamischen Drehmomentaufbau (Verringerung des Turboloches); ein verbessertes Aufheizverhalten eines im Abgasstrang stromab des Abgasturboladers angeordneten Katalysators; ein geringerer Platzbedarf und ein geringeres Gewicht.

Mit der erfindungsgemäßen Auslegung des Abgasturboladers in Bezug auf die Brennkraftmaschine werden beispielsweise folgende stationäre Mitteldrücke erreicht bzw. überschritten:

>10,5 bar, insbesondere >11 bar, bevorzugt >11,5 bar, optimal >12 bar bei einer Motordrehzahl von 1.000 U/min; und/oder
>15 bar, insbesondere >15,5 bar, bevorzugt >16 bar, optimal >16,5 bar bei einer Motordrehzahl von 1.350 U/min; und/oder
>15,5 bar, insbesondere >16 bar, bevorzugt >16,5 bar, optimal >17 bar bei einer Motordrehzahl von 1.500 U/min.

Dynamisch. d.h. bei einer dem Kleinlastbetrieb folgenden Volllast-Wunschvorgabe, wird folgender Mitteldruckverlauf erreicht bzw. überschritten: Motordrehzahl konstant 1.320 U/min, stationärer Betrieb 3,5 bar, diesem folgend die Volllast-Wunschvorgabe:

- Nach 250 ms >5 bar, insbesondere >5,5 bar, bevorzugt >6 bar, optimal >6,5 bar; und/oder
- nach 500 ms >6 bar, insbesondere >6,5 bar, bevorzugt >7 bar, optimal >7,5 bar; und/oder
- nach 1.000 ms >9 bar, insbesondere >9,5 bar, bevorzugt >10 bar, optimal >10,5 bar (im Stand der Technik werden hier nur 5,5 bis 7 bar erreicht).

Bevorzugt wird ein erfindungsgemäß ausgelegter Abgasturbolader mit einem direkteinspritzenden Ottomotor kombiniert. Dieser Motor wird vorzugsweise zumindest im leerlaufnahen Drehzahlbereich (<1.500 U/min, <1,5 bar) im Schichtbetriebsmodus betrieben. Der Motor weist bevorzugt vier Ventile pro Zylinder auf.

Die erfindungsgemäße Brennkraftmaschine hat beispielsweise eine maximale Literleistung von 50 kW bis 70 kW, optimal von 55 kW bis 65 kW, im Nenndrehzahlband von vorzugsweise 4.800 U/min bis 6.200 U/min, optimal 5.200 U/min bis 5.700 U/min.

**Patentansprüche**

1. Brennkraftmaschine, insbesondere einen direkteinspritzenden Dieselmotor oder Ottomotor, insbesondere eines Kraftfahrzeuges, mit einem Abgasturbolader, welcher einen Verdichter und eine Turbine aufweist, wobei die Brennkraftmaschine eine vorbestimmte Nenndrehzahl $n_{Nenn}$ sowie ein vorbestimmtes Hubvolumen $V_H$ aufweist, wobei ferner ein Verdichterdruckverhältnis $p_{Verdichterdruckerhältnis}$ (10) des Verdichters des Abgasturboladers definiert ist als der Quotient eines Druckes $p_{2t}$ nach dem Verdichter zu einem Druck $p_{1t}$ vor dem Verdichter gemäß der Formel

$$p_{Verdichterdruckverhältnis} = \frac{p_{2t}}{p_{1t}}$$

und wobei ferner ein normierter Frischluftvolumenstrom $V_{NORM}$ (12) definiert ist als ein Quotient eines Frischluftvolumenstrom $V_{pkt1}$ vor dem Verdichter des Abgasturboladers zu einem Produkt aus der Nenndrehzahl $n_{Nenn}$ der Brennkraftmaschine und dem Hubvolumen $V_H$ der Brennkraftmaschine gemäß der Formel

$$V_{NORM} = \frac{V_{pkt1}}{n_{Nenn} * V_H},$$

**dadurch gekennzeichnet,**
**dass** der Abgasturbolader derart ausgebildet ist, dass eine ein Verdichterkennfeld, in dem das Verdichterdruckverhältnis $p_{Verdichterdruckerhältnis}$ (10) über dem normierten Frischluftvolumenstrom $V_{NORM}$ (12) aufgetragen ist, begrenzende Funktion (20) des Verdichterdruckverhältnisses $p_{Verdichterdruckerhältnis}$ (10) in Abhängigkeit von dem normierten Frischluftvolumenstrom $V_{NORM}$ (12) für eine konstante Verdichterdrehzahl $n_V = n_{Vmax}$, wobei $n_V$ eine Drehzahl des Verdichters des Abgasturboladers und $n_{Vmax}$ eine vorbestimmte maximale Drehzahl des Verdichters des Abgasturboladers ist, einen Wert $p_{Verdichterdruckerhältnis}$ ($V_{NORM}$) =1 bei einem Wert $V_{NORM}$<0,7 erreicht.

2. Brennkraftmaschine nach Anspruch 1, **dadurch gekennzeichnet, dass** der Abgasturbolader derart ausgebildet ist, dass die Funktion $p_{Verdichterdruckerhältnis}$ ($V_{NORM}$) für $n_V = n_{Vmax}$ den Wert 1 bei $V_{NORM}$<0,65, insbesondere bei $V_{NORM}$<0,60, erreicht.

3. Brennkraftmaschine nach Anspruch 1 oder 2, **dadurch gekennzeichnet, dass** der Abgasturbolader derart ausgebildet ist, dass eine Funktionenschar $p_{Verdichterdruckerhältnis}$($V_{NORM}$) für

$$0,5 \leq \frac{n_V}{n_{V\,max}} \leq 1$$ den Wert 1 im Bereich 0,3 <

$V_{NORM}$ < 0.65 erreicht.

4. Brennkraftmaschine nach wenigstens einem der vorhergehenden Ansprüche, **dadurch gekennzeichnet, dass** das Hubvolumen der Brennkraftmaschine 700 cm$^3$ bis 5.100 cm$^3$, insbesondere 950 cm$^3$ bis 2.250 cm$^3$, vorzugsweise 990 cm$^3$ bis 1.800 cm$^3$ beträgt.

5. Brennkraftmaschine nach wenigstens einem der vorhergehenden Ansprüche, **dadurch gekennzeichnet, dass** die Nenndrehzahl der Brennkraftmaschine 4.800 U/min bis 6.200 U/min, insbesondere 5.200 U/min bis 5.700 U/min beträgt.

6. Verfahren zum Betreiben einer Brennkraftmaschine, welche gemäß wenigstens einem der vorhergehenden Ansprüche ausgebildet ist,
**dadurch gekennzeichnet,**
**dass** in einem mittleren bis oberen Drehzahlbereich entsprechend $V_{Norm}$ > 0,35 der Ladedruck des Turboladers abgesenkt wird.

7. Verfahren nach Anspruch 6, **dadurch gekennzeichnet, dass** der Ladedruck durch Öffnen eines Wastgates des Abgasturboladers abgesenkt wird.

**Claims**

1. Internal combustion engine, in particular a direct-injection diesel engine or spark ignition engine, in particular of a motor vehicle, having an exhaust gas turbocharger which has a compressor and a turbine, the internal combustion engine having a predetermined nominal speed $n_{Nenn}$ and a predetermined swept volume $V_H$, a compressor pressure ratio $p_{Verdichterdruckverhältnis}$ (10) Of the compressor of the exhaust gas turbocharger further being defined as the quotient of a pressure $p_{2t}$ downstream of the compressor in relation to a pressure $p_{1t}$ upstream of the compressor according to the formula

$$p_{Verdichterdruckverhältnis} = \frac{p_{2t}}{p_{1t}}$$

and a normalized fresh air volume flow $V_{NORM}$ (12) further being defined as a quotient of a fresh air volume flow $V_{pkt1}$ upstream of the compressor of the exhaust gas turbocharger in relation to a product of the nominal speed $n_{Nenn}$ of the internal combustion engine and the swept volume $V_H$ of the internal combustion engine according to the formula

$$V_{NORM} = \frac{V_{pkt1}}{n_{Nenn} * V_H},$$

**characterized in that** the exhaust gas turbocharger is configured such that a function (20) of the compressor pressure ratio $p_{Verdichterdruckverhältnis}$ (10), which limits a compressor input-output map in which the compressor pressure ratio $p_{Verdichterdruckverhältnis}$ (10) is plotted over the normalized fresh air volume flow $V_{NORM}$ (12) in dependence on the normalized fresh air volume flow $V_{NORM}$ (12) for a constant compressor speed $n_V = n_{Vmax}$, where $n_V$ is a speed of the compressor of the exhaust gas turbocharger and $n_{Vmax}$ is a predetermined maximum speed of the compressor of the exhaust gas turbocharger, attains a value $p_{Verdichterdruckverhältnis}$ $(V_{NORM}) = 1$ with a Value $V_{NORM} < 0.7$.

2. Internal combustion engine according to Claim 1, **characterized in that** the exhaust gas turbocharger is configured such that the function $p_{Verdichterdruckverhältnis}$ $(V_{NORM})$ for $n_V = n_{Vmax}$ attains the value 1 with $V_{NORM} < 0.65$, in particular with $V_{NORM} < 0.60$.

3. Internal combustion engine according to Claim 1 or 2, **characterized in that** the exhaust gas turbocharger is configured such that a family of functions $p_{Verdichterdruckverhältnis}(V_{NORM})$ for

$$0.5 \le \frac{n_V}{n_{V\max}} \le 1 \quad \text{attains the value 1 in the range}$$

$0.3 < V_{NORM} < 0.65$.

4. Internal combustion engine according to at least one of the preceding claims, **characterized in that** the swept volume of the internal combustion engine is 700 cm$^3$ to 5100 cm$^3$, in particular 950 cm$^3$ to 2250 cm$^3$, preferably 990 cm$^3$ to 1800 cm$^3$.

5. Internal combustion engine according to at least one of the preceding claims, **characterized in that** the nominal speed of the internal combustion engine is 4800 rpm to 6200 rpm, in particular 5200 rpm to 5700 rpm.

6. Method for operating an internal combustion engine which is configured according to at least one of the preceding claims, **characterized in that** the boost pressure of the turbocharger is lowered in a medium to upper engine speed range corresponding to $V_{NORM} > 0.35$.

7. Method according to Claim 6, **characterized in that** the boost pressure is lowered by opening a waste gate of the exhaust gas turbocharger.

**Revendications**

1. Moteur à combustion interne, en particulier un moteur à essence ou un moteur Diesel à injection directe, notamment d'un véhicule automobile, avec un turbocompresseur qui présente un compresseur et une turbine, sachant que le moteur à combustion interne présente un régime nominal $n_{Nenn}$ prédéfini ainsi qu'une cylindrée $V_H$ prédéfinie, sachant en outre qu'un taux de compression $P_{Verdichterdruckverhältnis}$ (10) du compresseur du turbocompresseur est défini comme le quotient d'une pression $p_{2t}$ en aval du compresseur par une pression $p_{1t}$ en amont du compresseur, selon la formule

$$p_{Verdichterdruckverhältnis} = \frac{p_{2t}}{p_{1t}},$$

et sachant en outre qu'un débit volumique normalisé d'air frais $V_{NORM}$ (12) est défini comme le quotient d'un débit volumique d'air frais $V_{pkt1}$ en amont du compresseur du turbocompresseur par le produit du régime nominal $n_{Nenn}$ du moteur à combustion interne et de la cylindrée $V_H$ du moteur à combustion interne, selon la formule

$$V_{NORM} = \frac{V_{pkt1}}{n_{Nenn} * V_H},$$

**caractérisé en ce que** le turbocompresseur est conçu de telle sorte qu'une fonction (20) - délimitant un diagramme caractéristique de compresseur dans lequel le taux de compression $P_{Verdichterdruckverhältnis}$ (10) est rapporté au débit volumique normalisé d'air frais $V_{NORM}$ (12) - du taux de compression $P_{Verdichterdruckverhältnis}$ (10) en relation avec le débit volumique normalisé d'air frais $V_{NORM}$ (12), pour une vitesse de rotation constante du compresseur $n_V = n_{Vmax}$ - où $n_V$ est la vitesse de rotation du compresseur du turbocompresseur et $n_{Vmax}$ est une vitesse de rotation maximale prédéfinie du compresseur du turbocompresseur -, atteint une valeur $P_{Verdichterdruckverhältnis}$ ($V_{NORM}$) = 1 avec une valeur $V_{NORM}$ < 0,7.

2. Moteur à combustion interne selon la revendication 1, **caractérisé en ce que** le turbocompresseur est conçu de telle sorte que la fonction $p_{Verdichterdruckverhältnis}$ ($V_{NORM}$) pour $n_V$ = $n_{Vmax}$ atteint la valeur 1 avec $V_{NORM}$ < 0, 65, notamment avec $V_{NORM}$ < 0,60.

3. Moteur à combustion interne selon la revendication 1 ou 2, **caractérisé en ce que** le turbocompresseur est conçu de telle sorte qu'une famille de fonctions $p_{Verdichterdruckverhältnis}$ ($V_{NORM}$) pour

$$0,5 \leq \frac{n_V}{n_{V\,max}} \leq 1 \quad \text{atteint la valeur 1}$$

dans la plage 0,3 < $V_{NORM}$ < 0,65.

4. Moteur à combustion interne selon au moins l'une quelconque des revendications précédentes, **caractérisé en ce que** la cylindrée du moteur à combustion interne est de 700 cm$^3$ à 5100 cm$^3$, notamment de 950 cm$^3$ à 2250 cm$^3$, de préférence de 990 cm$^3$ à 1800 cm$^3$.

5. Moteur à combustion interne selon au moins l'une quelconque des revendications précédentes, **caractérisé en ce que** le régime nominal du moteur à combustion interne est de 4800 tr/min. à 6200 tr/min., notamment de 5200 tr/min. à 5700 tr/min.

6. Procédé d'exploitation d'un moteur à combustion interne qui est conçu selon au moins l'une quelconque des revendications précédentes, **caractérisé en ce que** la pression de suralimentation du turbocompresseur est abaissée dans une plage moyenne à supérieure de régime correspondant à $V_{NORM}$ > 0,35.

7. Procédé selon la revendication 6, **caractérisé en ce que** la pression de suralimentation est abaissée en ouvrant une soupape de décharge du turbocompresseur.

FIG. 1

FIG. 2
Stand der Technik

FIG. 3

**EP 1 515 020 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 69519306 T2
- DE 19826355 A1
- DE 19706859 A1